# EUROPÄISCHE PATENTSCHRIFT

(11) **EP 3 285 902 B1**
(45) Veröffentlichungstag und Bekanntmachung des Hinweises auf die Patenterteilung: **06.10.2021**
(21) Anmeldenummer: 16714405.4
(22) Anmeldetag: 04.04.2016
(51) Int. Cl.: B01D 29/15, B01D 29/96, B25B 27/00

(54) **FILTERELEMENT MIT ENTFERNUNGSELEMENT**
FILTERELEMENT WITH REMOVING TOOL
ELEMENT FILTRANT AVEC OUTIL DE DEMONTAGE

(30) Priorität: 24.04.2015 DE 102015207565
(43) Veröffentlichungstag der Anmeldung: 28.02.2018
(73) Patentinhaber: Robert Bosch GmbH, 70442 Stuttgart (DE)
(72) Erfinder: CASTEJON LOPEZ, Miguel, 28033 Madrid (ES); ARIAS ARIAS, Jose Luis, 28007 Madrid (ES); AYZA PARRA, David, 12100 Castellon de la Plana (ES)
(86) Internationale Anmeldenummer: PCT/EP2016/057337
(87) Internationale Veröffentlichungsnummer: WO 2016/169754

(56) Entgegenhaltungen:
- EP-A1- 1 008 375
- EP-A1- 1 618 937
- EP-A1- 2 764 901
- DE-A1- 4 415 890
- JP-B1- 5 571 865
- US-A1- 2010 176 046
- US-A1- 2014 044 612
- US-A1- 2014 284 265

## Beschreibung

### Stand der Technik

Die vorliegende Erfindung betrifft ein Filterelement, das insbesondere in einem Flüssigkeitsfilter, wie in einem Kraftstofffilter oder Harnstofffilter, einsetzbar ist.

Aus dem Stand der Technik sind Flüssigkeitsfilter, insbesondere Harnstofffilter bekannt. Diese weisen einen Filterkörper auf, der zumeist aus einem instabilen Material, wie beispielsweise Papier, gefertigt ist. Der Filterkörper weist zumeist eine hohlzylindrische Form auf und ist mit Abschlusskappen versehen. Wird der Filter, beispielsweise an einem Fahrzeug, eingesetzt, so befindet sich der Filter innerhalb eines Gehäuses, wobei die Abschlusskappen den Filter zu dem Gehäuse abdichten, sodass eine Flüssigkeit in den Innenraum des Filters gelangen kann, um anschließend durch den Filterkörper gefiltert zu werden, um das Gehäuse an einer Umfangsfläche wieder zu verlassen.

Soll der Filter aus dem Gehäuse entfernt werden, so besteht die Gefahr, dass der Filterkörper beschädigt wird und abreißt, sodass lediglich ein Teil des Filters entfernt werden kann. Der im Gehäuse verbleibende Teil muss anschließend mit großem Aufwand entfernt werden. Bestärkt wird diese Problematik dadurch, dass der Filter während seines Einsatzes mit Flüssigkeiten in Kontakt kommt, sodass der Filter aufquillt und eine Anhaftwirkung und Haftreibung des Filters an der Gehäusewand entsteht.

Aus der EP 1 008 375 A1 sind ein auswechselbares Filterelement und eine Deckelanordnung bekannt.

Aus der US 2014 / 0284265 A1 ist ein Flüssigkeitsfilter mit einem Filtereinsatz bekannt.

Aus der US 2010 / 0176046 A1 ist ein Filtrationssystem mit einem Filterkorb und/oder einem Filterelement bekannt.

Aus der EP 2 764 901 A1 ist ein Spin-On-Filterelement zur Montage mittels eines Schraubvorgangs in einem Flüssigkeitsfilter bekannt. Das Filterelement weist in einer Endkappe eine Öffnung mit einem Gewinde zum Aufschrauben an einen mit einem komplementären Gewinde versehenen Anschluss des Flüssigkeitsfilters auf. Um sicherzustellen, dass das richtige Filterelement in dem Flüssigkeitsfilter montiert wird, ist vorgesehen, dass vorgelagert zu dem komplementären Gewinde des Anschlusses des Flüssigkeitsfilters wenigstens ein Kodiervorsprung angeordnet ist. Das Gewinde des Filterelements weist dementsprechend zumindest einen Schlitz auf, der es ermöglicht, das Filterelement vor dem Anschrauben bzw. Abschrauben von dem komplementären Gewinde gemäß einer Schlüssel-Schloss-Verbindung über den wenigstens einen Kodiervorsprung zu schieben.

### Offenbarung der Erfindung

Ein Filterelement mit den Merkmalen des Anspruchs 1 gemäß der vorliegenden Erfindung umfasst einen hohlförmigen, insbesondere hohlzylinderförmigen, Filterkörper. Nachfolgend getätigte Richtungsangaben, insbesondere die Richtungen radial, axial und Umfangsrichtung, beziehen sich auf den hohlförmigen Filterkörper. Der Filterkörper ist bevorzugt aus einer Zellulose-Schicht gefertigt, die mit einem Epoxidharz getränkt und mit einem Meltblown, insbesondere aus Polymeren, kombiniert ist. Weiterhin umfasst das Filterelement zumindest eine, insbesondere ringförmige, Abschlusskappe. Die Abschlusskappe ist an einem axialen Ende des Filterelementes angeordnet, vorteilhafterweise an dem Filterelement befestigt. Besonders bevorzugt weist das Filterelement zwei Abschlusskappen auf, die an jeweils einem axialen Ende des Filterkörpers befestigt sind. Beide Abschlusskappen sind vorteilhafterweise aus Kunststoff, zum Beispiel Polypropylen gefertigt. Vorteilhafterweise weist lediglich eine der Abschlusskappen die nachfolgend beschriebenen Merkmale auf. Die Abschlusskappe weist einen Durchführungsbereich mit einem ersten Innendurchmesser und einen Eingriffsbereich mit einem zweiten Innendurchmesser auf. Sowohl der Durchgangsbereich als auch der Eingriffsbereich sind vorteilhafterweise an der Abschlusskappe angeordnet. Somit weist die Abschlusskappe an dem Durchführungsbereich den ersten Innendurchmesser auf, während die Abschlusskappe an dem Eingriffsbereich den zweiten Innendurchmesser aufweist. Dabei ist vorgesehen, dass der erste Innendurchmesser größer als der zweite Innendurchmesser ist. Weiterhin ist vorgesehen, dass ein Werkzeug durch den Durchführungsbereich durchführbar ist und an dem Eingriffsbereich mit der Abschlusskappe in Eingriff bringbar ist.

Das Filterelement gemäß der Erfindung weist somit den Vorteil auf, dass ein Werkzeug durch das gesamte Filterelement durchführbar ist, um insbesondere diejenige Abschlusskappe zu greifen, die am Weitesten innerhalb eines Gehäuses angeordnet ist. Somit erfolgt eine Kraftübertragung bei einem Entfernen des Filterelements aus einem Gehäuse nicht über den Filterkörper, sondern vom Werkzeug über die am weitesten im Gehäuse angeordnete Abschlusskappe bezüglich einer Einschiebrichtung des Filterelements in ein Filtergehäuse auf den Filterkörper. Eine Zerstörung des Filterkörpers ist damit ausgeschlossen und eine gegebenenfalls vorliegende Haftreibung des Filters zu einem Gehäuse kann überwunden werden. Dies gilt vorzugsweise auch dann, wenn das Filterelement kein inneres Stützrohr aufweist, das die beiden Abschlusskappen miteinander verbindet. Wenn also, mit anderen Worten, die Abschlusskappen nur durch den Filterkörper selbst miteinander verbunden sind. Derartige Filter ohne Stützelement sind besonders kostengünstig herstellbar. Allerdings muss in einem solchen Fall der Filterkörper beim Herausziehen an der einer Auszugsöffnung des Filtergehäuses am nächsten gelegenen Abschlusskappe in einer herkömmlichen Anordnung die Zugkräfte alleine aushalten, was vor allem bei feuchtem bzw. flüssigkeitsdurchtränkten Filterkörper dazu führen kann, dass der Filterkörper innerlich zerreißt. Erfindungsgemäß wird der Filterkörper beim Herausziehen mittels des Werkzeugs dagegen lediglich Druckkräften ausgesetzt. Sollte er beim Herausziehen beschädigt werden, so werden die beschädigten Teile des Filterkörpers durch die der Auszugsöffnung am weitesten entfernt gelegenen Abschlusskappe, an der mittels des Werkzeugs gezogen wird, beim Auszugsvorgang mit entfernt.

Die Unteransprüche zeigen bevorzugte Weiterbildungen der Erfindung.

Vorzugsweise ist der hohlförmige Filterkörper ein Kreiszylinder. Der Filterkörper weist einen äußeren Filterkörper-Kreisdurchmesser an seiner Außenseite auf und einen inneren Filterkörper-Kreisdurchmesser auf. Der innere Filterkörper-Kreisdurchmesser entspricht dabei dem Kreisdurchmesser des hohlen Innenzylinders des Filterkörpers. Bevorzugt ist insbesondere der hohle Innenzylinder kreiszylinderförmig. Bevorzugt entspricht der erste Innendurchmesser der Abschlusskappe dem Kreisdurchmesser des Kreiszylinders, insbesondere des hohlen inneren kreiszylinderförmigen Zylinders des Filterkörpers. Der Durchführungsbereich weist somit den gleichen Kreisdurchmesser wie der Filterkörper auf. Der zweite Innendurchmesser ist vorzugsweise ebenfalls ein Kreisdurchmesser, insbesondere konzentrisch zum ersten Kreisdurchmesser. Somit kann auf einfache Weise eine Schlüssel-Schloss-Anordnung zwischen der Abschlusskappe und dem Werkzeug realisiert werden. Der Kreiszylinder kann insbesondere eine Oberflächenstruktur, wie besonders bevorzugt eine in radialer Richtung verlaufende Wellenform, aufweisen. Eine solche Wellenform kann im Querschnitt durch das sternförmig gefaltete Filtermaterial des Filterkörpers entstehen.

Der Eingriffsbereich weist eine Muldenform auf. Somit ist vorgesehen, dass ein Werkzeug formschlüssig mit dem Eingriffsbereich verbindbar ist, indem das Werkzeug in die Muldenform eingeführt wird. Auf diese Weise erlaubt der Eingriffsbereich neben der Übertragung von axialen Kräften von dem Werkzeug auf das Filterelement auch die Übertragung von rotatorischen Kräften. Somit ist es insbesondere möglich, das Filterelement bei Entfernung aus einem Gehäuse zu rotieren, wodurch Anhaftungen des Filterkörpers an dem Gehäuse gelöst werden können und eine Haftreibung besser überwunden werden kann.

Weiterhin ist vorteilhafterweise vorgesehen, dass der Durchführungsbereich in Umfangsrichtung neben dem Eingriffsbereich angeordnet ist. Somit ist ermöglicht, dass ein Werkzeug durch das Filterelement durchführbar ist, wobei dies innerhalb des Eingriffsbereiches bzw. des Durchführungsbereiches geschieht. Nach Durchführen des Werkzeugs durch das Filterelement kann das Werkzeug rotiert werden, um an dem Eingriffsbereich anzuliegen.

Bevorzugt ist die Abschlusskappe symmetrisch ausgebildet. Dabei ist insbesondere vorgesehen, dass die Abschlusskappe zumindest zwei Durchführungsbereiche und zumindest zwei Eingriffsbereiche aufweist. Die Symmetrie der Abschlusskappe ist insbesondere eine Punktsymmetrie um die Mittelachse des hohlzylinderförmigen Filterkörpers. Die Abschlusskappe ist daher insbesondere rotationssymmetrisch aufgebaut.

Der Eingriffsbereich umfasst bevorzugt einen Vorsprung. Der Vorsprung ist insbesondere radial nach innen und somit in Richtung der Mittelachse gerichtet. Der zweite Innendurchmesser ist an dem Vorsprung vorgesehen. Besonders vorteilhaft weist die Abschlusskappe einen Werkzeugaufnahmebereich auf, an dem die Abschlusskappe den ersten Innendurchmesser besitzt. Dabei ist vorgesehen, dass der Durchführungsbereich einem Teilbereich des Werkzeugaufnahmebereiches entspricht. Der Vorsprung ist auf dem Werkzeugaufnahmebereich angeordnet und hebt sich damit von dem Durchführungsbereich ab. Durchführungsbereich und Eingriffsbereich sind vorteilhafterweise unmittelbar benachbart angeordnet. Ein Werkzeug kann somit sehr einfach durch den Durchführungsbereich geführt werden, um anschließend durch eine Rotation zu dem Eingriffsbereich zu gelangen.

Das Filterelement weist bevorzugt weiterhin ein Dämpfungselement auf, wobei das Dämpfungselement an einem Befestigungsbereich der Abschlusskappe befestigt ist. Die Befestigung erfolgt insbesondere formschlüssig. Besonders vorteilhaft weist das Dämpfungselement zumindest ein Rastelement auf, sodass das Dämpfungselement an der Abschlusskappe anrastbar ist. Somit ist eine einfache, insbesondere lösbare, und dennoch stabile Verbindung zwischen Abschlusskappe und Dämpfungselement gegeben. Das Dämpfungselement ist aus einem elastischen Material, bevorzugt aus Kautschuk, gefertigt.

Vorteilhafterweise weist die Abschlusskappe außerdem einen Rampenbereich auf. Der Rampenbereich verläuft bevorzugt axial von dem Filterkörper weg, wobei der Rampenbereich gleichzeitig in Umfangsrichtung von dem Eingriffsbereich zu dem Durchführungsbereich verläuft. Sollten mehrere Eingriffsbereiche und Durchführungsbereiche vorhanden sein, so verläuft der Rampenbereich von einem Eingriffsbereich zu einem Durchführungsbereich, wobei der Eingriffsbereich und der Durchführungsbereich, zwischen dem sich der Rampenbereich erstreckt, nicht unmittelbar benachbart angeordnet sind. Durch den Rampenbereich ist ein Einführen des Werkzeuges erleichtert, da dieses an jeder beliebigen Stelle in das Filterelement einführbar ist. Durch eine Kraft in axialer Richtung wird das Werkzeug durch den Rampenbereich selbstständig zu dem Durchführungsbereich geführt.

Besonders vorteilhaft ist der Rampenbereich derart angeordnet, dass dieser in Umfangsrichtung denselben Bereich der Abschlusskappe überstreicht, wie der Befestigungsbereich. Dabei ist der Rampenbereich insbesondere näher als der Befestigungsbereich an dem Filterkörper angeordnet. Somit ist verhindert, dass ein Einführen des Werkzeugs in das Filterelement das Dämpfungselement von der Abschlusskappe löst. Insbesondere besteht die Gefahr, dass durch das Einschieben des Werkzeuges in das Filterelement die Verbindung zwischen Dämpfungselement und Abschlusskappe gelöst wird, indem das Werkzeug auf das Rastelement des Dämpfungselementes drückt. Dies ist durch die beschriebe Anordnung des Rampenbereiches wirksam verhindert. Wird das Werkzeug in den Filterkörper eingeschoben, so erreicht das Werkzeug zunächst den Rampenbereich der Abschlusskappe, bevor das Werkzeug den Befestigungsbereich der Abschlusskappe erreicht. Der Rampenbereich leitet das Werkzeug zu dem Durchführungsbereich, sodass ein Erreichen des Befestigungsbereichs und damit ein Lösen des Dämpfungselements verhindert ist.

Besonders vorteilhaft ist hierzu vorgesehen, dass Werkzeugaufnahmebereich und Befestigungsbereich in Umfangsrichtung der Abschlusskappe abwechselnd angeordnet sind. So sind Werkzeugaufnahmebereich und Befestigungsbereich nebeneinander angeordnet. Weiterhin ist besonders vorteilhaft, wenn das Dämpfungselement an einer Position, die axial über dem Werkzeugaufnahmebereich liegt, eine, insbesondere nierenförmige, Ausnehmung aufweist. Die Ausnehmung ist bevorzugt eine Durchgangsöffnung. Somit ist das Werkzeug auch durch das Dämpfungselement durchführbar, wodurch ein unbeabsichtigtes Lösen des Dämpfungselementes von der Abschlusskappe durch das Werkzeug verhindert ist. Insbesondere ist das Werkzeug innerhalb der Ausnehmung des Dämpfungselements rotierbar, um von dem Durchführungsbereich zu dem Eingriffsbereich zu gelangen.

Die Erfindung betrifft weiterhin einen Flüssigkeitsfilter. Der Flüssigkeitsfilter ist insbesondere ein Treibstofffilter oder ein Harnstofffilter, und ist besonders vorteilhaft zur Verwendung in Kraftfahrzeugen mit Verbrennungsmotoren geeignet. Der Flüssigkeitsfilter umfasst ein Filterelement wie zuvor beschrieben sowie ein Gehäuse. Dabei ist das Filterelement in dem Gehäuse angeordnet, wobei das Gehäuse eine, insbesondere maximal eine, Öffnung aufweist, über die das Filterelement in das Gehäuse einführbar oder aus dem Gehäuse entfernbar ist. Insbesondere ist das Gehäuse hohlzylinderförmig ausgestaltet, insbesondere kreiszylinderförmig, wobei eine Stirnfläche des Hohlzylinders des Gehäuses zumindest teilweise verschlossen ist, insbesondere der Art, dass das Filterelement durch die diese Stirnfläche aufweisende Seite des Gehäuses nicht entnommen werden kann. Es versteht sich, dass an dieser Stirnseite Einlassstutzen und/oder Auslassstutzen für Flüssigkeit vorgesehen sein können. Somit ist das Filterelement ausschließlich über die verbleibende Stirnfläche in den Hohlzylinder einführbar. Es ist ersichtlich, dass somit zumindest eine Abschlusskappe nicht unmittelbar erreichbar ist. Hierbei ist das erfindungsgemäße Filterelement vorteilhaft, da mit einem Werkzeug diejenige Abschlusskappe greifbar ist, die sich in axialer Richtung am Weitesten innerhalb des Gehäuses befindet.

Schließlich umfasst die Erfindung eine Anordnung umfassend ein Filterelement wie zuvor beschrieben sowie ein Werkzeug. Es ist vorgesehen, dass das Werkzeug in das Filterelement einführbar ist, wobei das Werkzeug durch den Durchführungsbereich durchführbar ist und an dem Eingriffsbereich mit der Abschlusskappe des Filterelements in Eingriff bringbar ist, bevorzugt die der Öffnung entfernt liegende Abschlusskappe. Auf diese Weise ist das Filterelement von dem Werkzeug greifbar, sodass das Filterelement aus einem Gehäuse entfernbar ist. Dazu weist das Werkzeug zumindest ein Eingriffselement auf, das vorteilhafterweise in seiner Form komplementär zu dem Eingriffsbereich der Abschlusskappe ausgebildet ist. Somit ist vorteilhafterweise ein Formschluss zwischen Werkzeug und Abschlusskappe herstellbar, wobei der Formschluss zumindest in einer axialen Richtung und in beiden Umfangsrichtungen wirkt.

### Kurze Beschreibung der Zeichnungen

Nachfolgend werden Ausführungsbeispiele der Erfindung unter Bezugnahme auf die beiliegende Zeichnung im Detail beschrieben. In der Zeichnung ist:
- Figur 1: eine schematische Darstellung eines Filterelements 1 gemäß einem Ausführungsbeispiel der Erfindung,
- Figur 2: eine schematische Darstellung einer Abschlusskappe und eines Dämpfungselements eines Filterelements gemäß dem Ausführungsbeispiel der Erfindung,
- Figur 3: eine schematische Darstellung eines Flüssigkeitsfilters mit einem Filterelement gemäß dem Ausführungsbeispiel der Erfindung,
- Figur 4: eine schematische Darstellung eines Teilbereichs eines Werkzeugs zur Verwendung mit dem Filterelement gemäß dem Ausführungsbeispiel der Erfindung,
- Figur 5: eine weitere schematische Darstellung des Werkzeugs aus Figur 4, und
- Figur 6: eine schematische Darstellung des Filterelements aus Figur 1 während der Verwendung des Werkzeugs aus Figur 5.

### Ausführungsformen der Erfindung

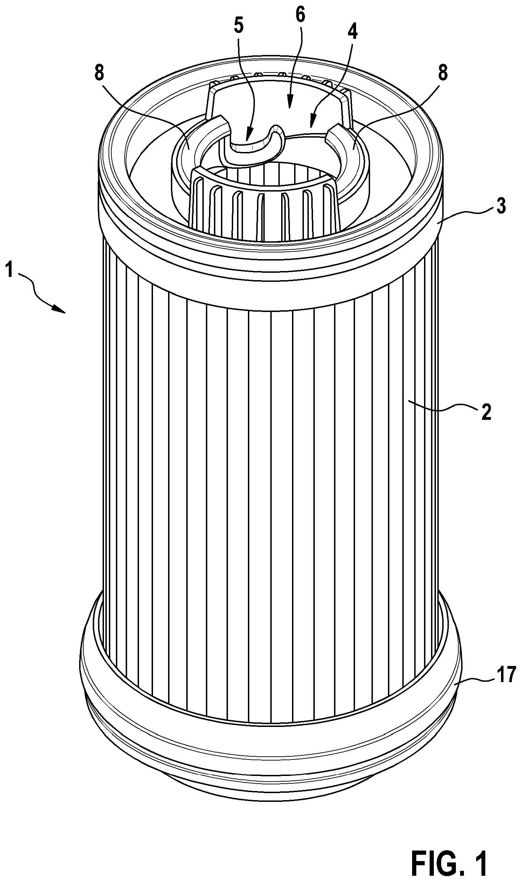

Figur 1 zeigt ein Filterelement 1 gemäß einem Ausführungsbeispiel der Erfindung. Das Filterelement 1 umfasst einen Filterkörper 2 sowie eine ringförmige Abschlusskappe 3. Die Abschlusskappe 3 ist an einem axialen Ende des Filterkörpers 2 angeordnet, wobei der Filterkörper 2 eine hohlzylindrische Form aufweist, die hier kreiszylindrisch ausgebildet ist. Daher werden im Folgenden sämtliche Richtungsangaben bezüglich dem Hohlzylinder angegeben.

Das Filterelement 1 weist weiterhin eine zusätzliche zweite Abschlusskappe 17 auf, die axial an einem der Abschlusskappe 3 gegenüberliegenden Ende des Filterkörpers 2 angeordnet ist. Die zusätzliche zweite Abschlusskappe 17 wird im Rahmen dieser Erfindung nicht weiter betrachtet. Insbesondere ist lediglich vorgesehen, dass die zweite zusätzliche Abschlusskappe 17 ringförmig ausgestaltet ist und einen Innendurchmesser aufweist, der mindestens dem maximalen Innendurchmesser der Abschlusskappe 3 entspricht. Das Filterelement 1 weist in einem hohlen Inneren Kreiszylinder des Filterkörpers 2 im dargestellten Ausführungsbeispiel kein Stützrohr auf. Somit sind die beiden Abschlusskappen 3, 17 lediglich durch den Filterkörper 2 miteinander verbunden. Dadurch lässt sich das Filterelement in besonders einfacher und kostengünstiger Art und Weise herstellen. Es sind jedoch in anderen Ausführungsformen auch Filterelemente 1 vorstellbar, in denen im hohlen Innern des Filterkörpers 2 ein Stützrohr, beispielsweise aus Kunststoff vorgesehen ist, vorzugsweise ein Stützrohr, welches nicht fest mit den Abschlusskappe 3, 17 verbunden ist und lediglich radiale Kräfte des Filterkörpers 2 aufnimmt und so ein Kollabieren des Filterkörpers 2 verhindert. Der Filterkörper 2 weist einen äußeren Filterkörper-Durchmesser an seiner Außenseite auf und einen inneren Filterkörper-Durchmesser, der dem Durchmesser des hohlen, kreisförmigen Innenzylinders im Filterkörper 2 entspricht.

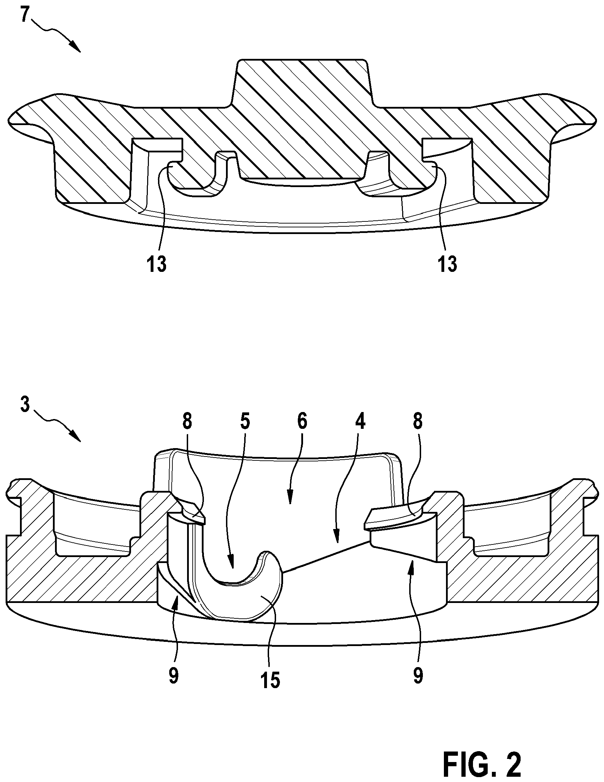

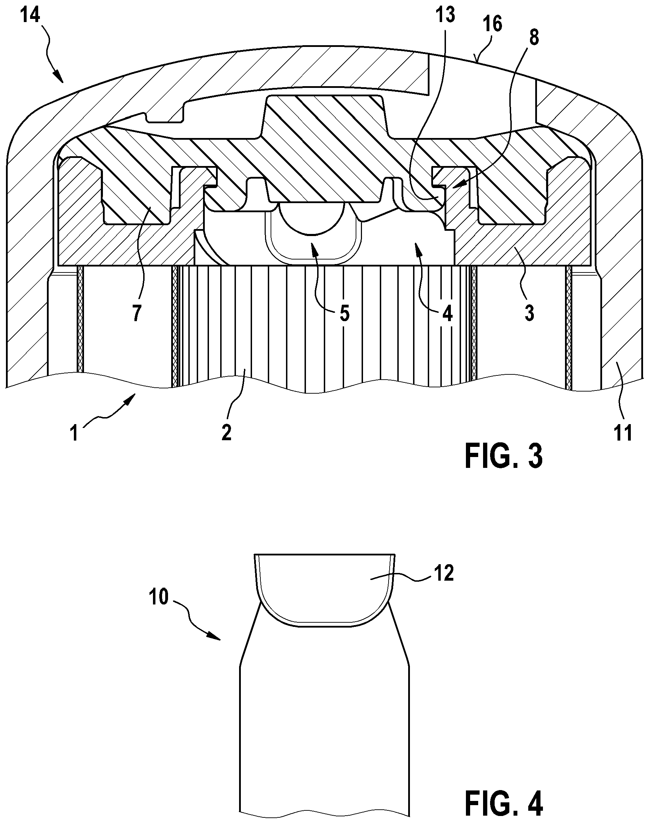

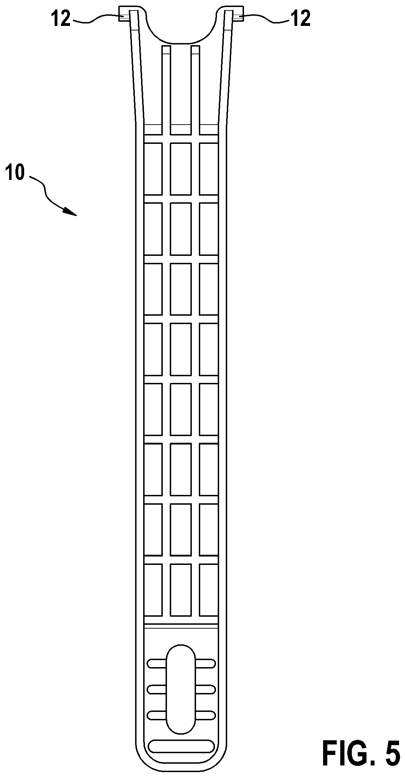

Die Abschlusskappe 3 weist einen Werkzeugaufnahmebereich 6 auf. Der Werkzeugaufnahmebereich 6 dient zum Durchführen eines Werkzeuges 10 (vergleiche Figur 4 und Figur 5), wobei sich der Werkzeugaufnahmebereich 6 in zwei Teilbereiche unterteilt. Dies ist detailliert aus Figur 2 ersichtlich.

Figur 2 zeigt schematisch eine Schnittansicht durch die Abschlusskappe 3 sowie durch ein Dämpfungselement 7. Abschlusskappe 3 und Dämpfungselement 7 sind in Explosionsdarstellung dargestellt. Es ist ersichtlich, dass die Abschlusskappe 3 den Werkzeugaufnahmebereich 6 aufweist, der sich in einen Durchführungsbereich 4 und in einen Eingriffsbereich 5 unterteilt. Der Durchführungsbereich 4 entspricht einer Stelle, an der die Abschlusskappe 3 einen ersten Innendurchmesser aufweist. Besonders vorteilhaft ist der erste Innendurchmesser ein maximaler Innendurchmesser der Abschlusskappe 3. Der Eingriffsbereich 5 ist ein Bereich, an dem die Abschlusskappe 3 einen zweiten Innendurchmesser aufweist, wobei der erste Innendurchmesser größer als der zweite Innendurchmesser ist. Insbesondere ist der Eingriffsbereich 5 dadurch gebildet, dass ein radial nach innen gerichteter Vorsprung 15 auf dem Werkzeugaufnahmebereich 6 angebracht ist. Der Eingriffsbereich 5 weist bevorzugt eine Muldenform auf, sodass das Werkzeug 10 formschlüssig in dem Eingriffsbereich 5 in Eingriff bringbar ist.

Aus Figur 4 und Figur 5 ist ein Werkzeug 10 ersichtlich, mit dem das Filterelement 1 greifbar ist. Dazu weist das Werkzeug 10 zwei Eingriffselemente 12 auf, die in komplementärer Form zu der Form der Eingriffsbereiche 5 ausgestaltet sind.

Das Werkzeug 10 ist somit durch das gesamte Filterelement 1 durchführbar, wobei das Werkzeug 10 aufgrund der Eingriffselemente 12 durch die Abschlusskappe 3 nur in dem Durchführungsbereich 4 durchführbar ist. Anschließend kann das Werkzeug 10 rotiert werden, wobei dies im Falle der Figur 2 einer Rotation entgegen dem Uhrzeigersinn entspricht. Anschließend sind die Eingriffselemente 12 mit dem Eingriffsbereich 5 formschlüssig verbindbar. Somit kann das Filterelement 1 aus einem Gehäuse 11 entfernt werden.

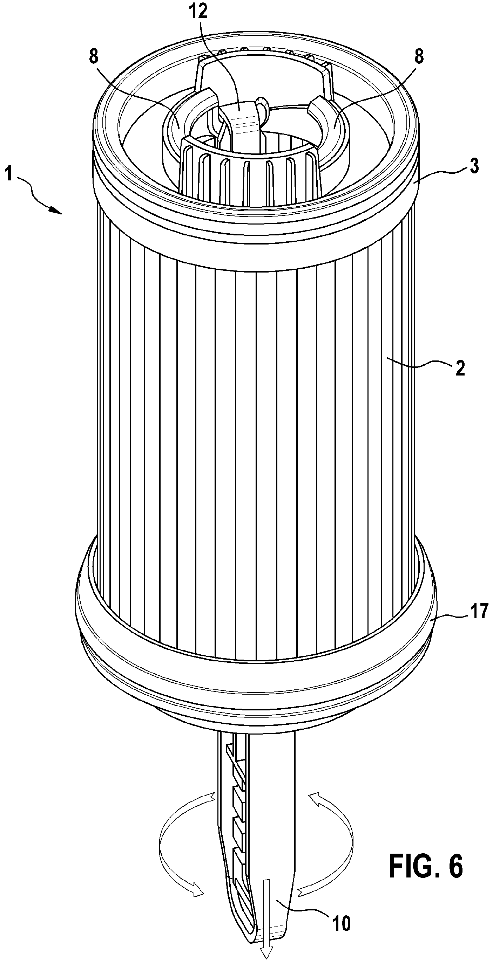

In Figur 3 ist ein Flüssigkeitsfilter 14 dargestellt, der das Filterelement 1 aus Figur 1 umfasst, das innerhalb eines Gehäuses 11 angeordnet ist. Dabei ist ersichtlich, dass das Gehäuse 11 eine Hohlzylinderform aufweist, wobei eine Stirnfläche des Hohlzylinders bis auf eine Einlassöffnung 16 vollständig verschlossen ist. Um das Filterelement 1 zu entfernen, muss dieses durch eine (nicht gezeigte) Öffnung innerhalb der nicht gezeigten anderen Stirnfläche des Gehäuses 11 herausgezogen werden. Wird jedoch eine Zugkraft in Axialrichtung auf die zusätzliche Abschlusskappe 4 aufgebracht, so besteht die Gefahr, dass der Filterkörper 2 beschädigt wird und abreißt, sodass die Abschlusskappe 3 weiterhin innerhalb des Gehäuses 11 verbleibt. Dies ist durch das Werkzeug 10 verhinderbar, da mit dem Werkzeug 10 die Abschlusskappe 3 greifbar ist. Gleichzeitig erlaubt das Werkzeug 10 aufgrund der formschlüssigen Verbindung zwischen den Eingriffselementen 12 und dem Eingriffsbereich 4 das Filterelement 1 innerhalb des Gehäuses 11 zu rotieren. Dies ist insbesondere dann hilfreich, wenn aufgrund von Haftreibung das Filterelement 1 an dem Gehäuse 11 anhaftet. In Figur 6 ist dargestellt, wie das Werkzeug 10 in das Filterelement 1 eingeführt ist, wobei die Eingriffselemente 12 in die Eingriffsbereiche 5 eingreifen. In dieser Stellung ist Drehmoment von dem Werkzeug 10 auf das Filterelement 1 übertragbar.

Figur 3 zeigt das in Figur 2 dargestellte Dämpfungselement 7 in einer mit der Abschlusskappe 3 verbundenen Position. Die Verbindung zwischen Abschlusskappe 3 und Dämpfungselement 7 ist über einen Befestigungsbereich 8 der Abschlusskappe und über jeweils ein Rastelement 13 des Dämpfungselements 7 realisierbar. Durch Befestigungsbereich 8 und Rastelement 13 ist eine formschlüssige Verbindung zwischen Abschlusskappe und Dämpfungselement 7 herstellbar, wie aus Figur 3 ersichtlich ist.

Wird das Werkzeug 10 in das Filterelement 1 eingeschoben, so besteht die Gefahr, dass die Eingriffselemente 12 das Dämpfungselement 7 von der Abschlusskappe 3 unbeabsichtigt lösen. Dies wird durch das Anbringen eines Rampenbereiches 9 verhindert. Dabei entspricht die Anzahl der Rampenbereiche 9 vorteilhafterweise der Anzahl der Werkzeugaufnahmebereiche 6. Der Rampenbereich 9 hat mehrere Vorteile:
Zum einen ist durch den Rampenbereich 9 verhinderbar, dass das Werkzeug das Dämpfungselement 7 von der Abschlusskappe 3 entfernt. Weiterhin ist durch den Rampenbereich 9 sichergestellt, dass das Werkzeug stets zu dem Durchführungsbereich 4 geführt wird. Dazu verläuft der Rampenbereich 9 in axialer Richtung von dem Filterkörper 2 weg und in Umfangsrichtung von einem Eingriffsbereich 5 zu einem gegenüberliegenden Durchführungsbereich 4. Das Werkzeug 10 kann somit an einer beliebigen Stelle des Filterelementes 1 eingeschoben werden, wobei durch eine axiale Krafteinwirkung auf das Werkzeug 10 dieses an dem Rampenbereich 9 anliegt und durch den Rampenbereich 9 unmittelbar zu dem Durchführungsbereich 4 geleitet wird. Somit kann das Werkzeug 10 niemals den Befestigungsbereich 8 erreichen, wodurch verhindert ist, dass das Werkzeug 10 die Rastelement 13 von dem Befestigungsbereich 8 löst.

Das Dämpfungselement 7 weist außerdem an denjenigen Stellen, die axial benachbart zu den Werkzeugaufnahmebereichen 6 der Abschlusskappe 3 gelegen sind, Ausnehmungen auf. Die Ausnehmungen sind insbesondere nierenförmig und vorteilhafterweise Durchgangsöffnungen. Somit ist das Werkzeug 10 an dem Durchführungsbereich 4 sowohl durch die Abschlusskappe 3 als auch durch das Dämpfungselement 7 durchführbar. Ebenso ist das Werkzeug 10 rotierbar, wenn sich das Eingriffselement 12 innerhalb der Ausnehmung des Dämpfungselements befindet, um so das Eingriffselement 12 von dem Durchführungsbereich 4 zu dem Eingriffsbereich 5 zu führen. Damit ist verhindert, dass das Dämpfungselement 7 versehentlich von der Abschlusskappe 3 gelöst wird. Die Ausnehmungen erlauben außerdem ein Durchführen von zu filternder Flüssigkeit durch das Dämpfungselement 7.

Mit dem Dämpfungselement 7 ist das Filterelement 1 dämpfbar, sodass das Filterelement 1 auch bei geringen Temperaturen betreibbar ist. Wird das Filterelement 1 bei geringen Temperaturen betrieben, so besteht die Gefahr, dass zu filternde Flüssigkeiten gefrieren. Durch das Vorsehen des Dämpfungselements 7 kann das Filterelement 1 einen Ausgleich schaffen, wenn die gefrierende Flüssigkeit in ihrem Volumen zunimmt. Dazu ist das Dämpfungselement 7 bevorzugt aus einem elastischen Material gefertigt, sodass dieses durch Verformung der Volumenausdehnung der Flüssigkeit begegnen kann. Eine Zerstörung des Filterelements 1 oder auch des Gehäuses 11 durch gefrierende Flüssigkeit ist damit ausgeschlossen.

## Patentansprüche

1. Filterelement (1), umfassend:
- einen hohlförmigen Filterkörper (2), und
- zumindest eine Abschlusskappe (3), die an einem axialen Ende des Filterkörpers (2) angeordnet ist,
- wobei die Abschlusskappe (3) einen Durchführungsbereich (4) mit einem ersten Innendurchmesser und einen Eingriffsbereich (5) mit einem zweiten Innendurchmesser aufweist,
- wobei der erste Innendurchmesser größer als der zweite Innendurchmesser ist, und
- wobei ein Werkzeug (10) durch den Durchführungsbereich (4) durchführbar ist und an dem Eingriffsbereich (5) mit der Abschlusskappe (3) in Eingriff bringbar ist,
wobei die Abschlusskappe (3) einen Rampenbereich (9) aufweist,
wobei der Rampenbereich (9) axial von dem Filterkörper (2) weg und in Umfangsrichtung von dem Eingriffsbereich (5) zu dem Durchführungsbereich (4) verläuft, **dadurch gekennzeichnet, dass** der Eingriffsbereich (5) eine Muldenform aufweist.

2. Filterelement (1) nach Anspruch 1, **dadurch gekennzeichnet, dass** der hohlförmige Filterkörper ein Kreiszylinder ist.

3. Filterelement nach einem der vorhergehenden Ansprüche,
wobei der Eingriffsbereich (5) derart ausgebildet ist, dass mit ihm ein Werkzeug (10) formschlüssig verbindbar ist.

4. Filterelement (1) nach einem der vorhergehenden Ansprüche, **dadurch gekennzeichnet, dass** der Durchführungsbereich (4) in Umfangsrichtung neben dem Eingriffsbereich (5) angeordnet ist.

5. Filterelement (1) nach einem der vorhergehenden Ansprüche, **dadurch gekennzeichnet, dass** die Abschlusskappe (3) zumindest zwei Durchführungsbereiche (4) und zumindest zwei Eingriffsbereiche (5) aufweist.

6. Filterelement nach dem vorhergehenden Anspruch,
wobei die Abschlusskappe (3) symmetrisch um eine Mittelachse ist.

7. Filterelement (1) nach einem der vorhergehenden Ansprüche, **dadurch gekennzeichnet, dass** der Eingriffsbereich (5) einen radial nach innen gerichteten Vorsprung (15) aufweist, wobei der zweite Innendurchmesser an dem Vorsprung (15) vorgesehen ist.

8. Filterelement (1) nach einem der vorhergehenden Ansprüche, wobei die Abschlusskappe (3) einen Befestigungsbereich (8) aufweist, der eingerichtet ist zur Befestigung eines Dämpfungselements (7).

9. Filterelement (1) nach dem vorhergehenden Anspruch, **gekennzeichnet durch** ein Dämpfungselement (7), wobei das Dämpfungselement (7) an dem Befestigungsbereich (8) der Abschlusskappe (3) befestigt ist.

10. Filterelement nach dem vorhergehenden Anspruch,
wobei das Dämpfungselement (7) an dem Befestigungsbereich (8) der Abschlusskappe (3) über ein Rastelement (13) befestigt ist.

11. Filterelement nach einem der beiden vorhergehenden Ansprüche,
wobei das Dämpfungselement (7) an dem Befestigungsbereich (8) der Abschlusskappe (3) formschlüssig befestigt ist.

12. Filterelement (1) nach einem der vorhergehenden Ansprüche, **dadurch gekennzeichnet, dass** sich der Rampenbereich (9) und der Befestigungsbereich (8) in Umfangsrichtung über denselben Bereich der Abschlusskappe (3) erstrecken, wobei der Rampenbereich (9) näher an dem Filterkörper (2) angeordnet ist.

13. Flüssigkeitsfilter (14), umfassend ein Filterelement (1) nach einem der vorhergehenden Ansprüche, sowie ein Gehäuse (11), wobei das Filterelement (1) über eine Öffnung des Gehäuses (11) in das Gehäuse (11) einführbar ist oder aus dem Gehäuse (11) entfernbar ist.

14. Anordnung umfassend ein Filterelement (1) nach einem der Ansprüche 1 bis 12, sowie ein Werkzeug (10), wobei das Werkzeug (10) durch den Durchführungsbereich (4) durchführbar ist und an dem Eingriffsbereich (5) mit der Abschlusskappe (3) in Eingriff bringbar ist, um das Filterelement (1) mit dem Werkzeug (10) aus einem Gehäuse (11) zu entfernen, und wobei das Werkzeug (10) zumindest ein Eingriffselement (12) aufweist, das eine Form komplementär zu dem Eingriffsbereich (5) des Filterelements (1) besitzt.

## Claims

1. Filter element (1) comprising:
- a hollow filter body (2), and
- at least one closure cap (3) which is arranged on an axial end of the filter body (2),
- wherein the closure cap (3) has a passage region (4) with a first inner diameter and has an engagement region (5) with a second inner diameter,
- wherein the first inner diameter is larger than the second inner diameter, and
- wherein a tool (10) can be passed through the passage region (4) and can be brought into engagement with the closure cap (3) on the engagement region (5),
wherein the closure cap (3) has a ramp region (9), wherein the ramp region (9) extends axially away from the filter body (2), and in the circumferential direction from the engagement region (5) to the passage region (4),
**characterized in that**
the engagement region (5) has a trough shape.

2. Filter element (1) according to Claim 1, **characterized in that** the hollow filter body is a circular cylinder.

3. Filter element according to either of the preceding claims,
wherein the engagement region (5) is formed in such a way that a tool (10) can be connected to it in a form-fitting manner.

4. Filter element (1) according to one of the preceding claims, **characterized in that** the passage region (4) is arranged next to the engagement region (5) in the circumferential direction.

5. Filter element (1) according to one of the preceding claims, **characterized in that** the closure cap (3) has at least two passage regions (4) and at least two engagement regions (5).

6. Filter element according to the preceding claim, wherein the closure cap (3) is symmetrical about a central axis.

7. Filter element (1) according to one of the preceding claims, **characterized in that** the engagement region (5) has a radially inwardly directed projection (15), wherein the second inner diameter is provided at the projection (15).

8. Filter element (1) according to one of the preceding claims,
wherein the closure cap (3) has a fastening region (8) which is configured for fastening a damping element (7).

9. Filter element (1) according to the preceding claim, **characterized by** a damping element (7), wherein the damping element (7) is fastened to the fastening region (8) of the closure cap (3).

10. Filter element according to the preceding claim, wherein the damping element (7) is fastened to the fastening region (8) of the closure cap (3) via a latching element (13).

11. Filter element according to one of the two preceding claims,
wherein the damping element (7) is fastened in a form-fitting manner to the fastening region (8) of the closure cap (3).

12. Filter element (1) according to one of the preceding claims, **characterized in that**, in the circumferential direction, the ramp region (9) and the fastening region (8) extend over the same region of the closure cap (3), wherein the ramp region (9) is arranged closer to the filter body (2).

13. Liquid filter (14) comprising a filter element (1) according to one of the preceding claims and comprising a housing (11), wherein the filter element (1), via an opening in the housing (11), can be inserted into the housing (11) or can be removed from the housing (11).

14. Arrangement comprising a filter element (1) according to one of Claims 1 to 12 and comprising a tool (10), wherein the tool (10) can be passed through the passage region (4), and can be brought into engagement with the closure cap (3) on the engagement region (5), in order to remove the filter element (1) from a housing (11) using the tool (10), and wherein the tool (10) has at least one engagement element (12) which has a shape complementary to the engagement region (5) of the filter element (1).

## Revendications

1. Élément filtrant (1), comprenant :
- un corps filtrant de forme creuse (2), et
- au moins un capuchon de terminaison (3), qui est agencé à une extrémité axiale du corps filtrant (2),
- le capuchon de terminaison (3) présentant une zone de passage (4) ayant un premier diamètre intérieur et une zone de prise (5) ayant un deuxième diamètre intérieur,
- le premier diamètre intérieur étant supérieur au deuxième diamètre intérieur, et
- un outil (10) pouvant traverser la zone de passage (4) et être mis en prise sur la zone de prise (5) avec le capuchon de terminaison (3),
le capuchon de terminaison (3) présentant une zone de rampe (9),
la zone de rampe (9) s'étendant axialement à distance du corps filtrant (2) et dans la direction circonférentielle depuis la zone de prise (5) jusqu'à la zone de passage (4),
**caractérisé en ce que**
la zone de prise (5) présente une forme d'auge.

2. Élément filtrant (1) selon la revendication 1, **caractérisé en ce que** le corps filtrant de forme creuse est un cylindre circulaire.

3. Élément filtrant selon l'une quelconque des revendications précédentes, dans lequel la zone de prise (5) est configurée de telle sorte qu'un outil (10) peut être raccordé à celle-ci par complémentarité de forme.

4. Élément filtrant (1) selon l'une quelconque des revendications précédentes, **caractérisé en ce que** la zone de passage (4) est agencée à côté de la zone de prise (5) dans la direction circonférentielle.

5. Élément filtrant (1) selon l'une quelconque des revendications précédentes, **caractérisé en ce que** le capuchon de terminaison (3) présente au moins deux zones de passage (4) et au moins deux zones de prise (5) .

6. Élément filtrant selon la revendication précédente, dans lequel le capuchon de terminaison (3) est symétrique autour d'un axe médian.

7. Élément filtrant (1) selon l'une quelconque des revendications précédentes, **caractérisé en ce que** la zone de prise (5) présente une protubérance (15) dirigée radialement vers l'intérieur, le deuxième diamètre intérieur étant prévu au niveau de la protubérance (15).

8. Élément filtrant (1) selon l'une quelconque des revendications précédentes, **caractérisé en ce que** le capuchon de terminaison (3) présente une zone de fixation (8), qui est conçue pour la fixation d'un élément d'amortissement (7).

9. Élément filtrant (1) selon la revendication précédente, **caractérisé par** un élément d'amortissement (7), l'élément d'amortissement (7) étant fixé à la zone de fixation (8) du capuchon de terminaison (3).

10. Élément filtrant selon la revendication précédente, **caractérisé en ce que** l'élément d'amortissement (7) est fixé à la zone de fixation (8) du capuchon de terminaison (3) par l'intermédiaire d'un élément d'encliquetage (13).

11. Élément filtrant selon l'une quelconque des deux revendications précédentes, **caractérisé en ce que** l'élément d'amortissement (7) est fixé à la zone de fixation (8) du capuchon de terminaison (3) par complémentarité de forme.

12. Élément filtrant (1) selon l'une quelconque des revendications précédentes, **caractérisé en ce que** la zone de rampe (9) et la zone de fixation (8) s'étendent dans la direction circonférentielle sur la même zone du capuchon de terminaison (3), la zone de rampe (9) étant agencée plus près du corps filtrant (2).

13. Filtre à liquide (14), comprenant un élément filtrant (1) selon l'une quelconque des revendications précédentes, ainsi qu'un boîtier (11), l'élément filtrant (1) pouvant être inséré dans le boîtier (11) ou sorti du boîtier (11) par l'intermédiaire d'une ouverture du boîtier (11).

14. Agencement comprenant un élément filtrant (1) selon l'une quelconque des revendications 1 à 12, ainsi qu'un outil (10), l'outil (10) pouvant traverser la zone de passage (4) et être mis en prise sur la zone de prise (5) avec le capuchon de terminaison (3), afin de sortir l'élément filtrant (1) hors du boîtier (11) avec l'outil (10), et l'outil (10) présentant au moins un élément de prise (12), qui possède une forme complémentaire de la zone de prise (5) de l'élément filtrant (1).
